Europäisches Patentamt

European Patent Office

Office européen des brevets

(11) Publication number: **0 293 756**
A2

# EUROPEAN PATENT APPLICATION

(21) Application number: 88108394.3

(22) Date of filing: 26.05.88

(51) Int. Cl.4: **B29C 45/58** , **B29C 45/27**

(30) Priority: **01.06.87 US 56056**

(43) Date of publication of application:
**07.12.88 Bulletin 88/49**

(84) Designated Contracting States:
**AT BE CH DE ES FR GB IT LI NL SE**

(71) Applicant: HUSKY INJECTION MOLDING
SYSTEMS LTD.
500 Queen Street South
CA-Bolton, Ontario L0P 1A0(CA)

(72) Inventor: Halar, Mladen
21 Deerpark Cres.
Brampton Ontario L6X 2T6(CA)
Inventor: Paulovic, Anthony
369 Hersey Cr.
Brampton Ontario(CA)
Inventor: Heathe, William E.
428 Bud Gergory Blvd.
Mississauga, Ontario L4Z 2P3(CA)

(74) Representative: Weiss, Peter
Schlachthausstrasse 1 Postfach 466
D-7700 Singen a.H.(DE)

(54) Method of processing molten plastic materials.

(57) Molten plastic material is transferred from a source of molten plastic material to a nozzle for supplying a mold for the formation of molded plastic articles along a transfer path, which subjects the molten plastic material to shear heating along the transfer path with the creation of a shear heating history. The shear heating history of the molten plastic material is substantially equalized by mixing the material at least once in the transfer path. The heating history of the molten plastic material is also equalized by mixing the material while it is in the source.

FIG-1

## BACKGROUND OF THE INVENTION

The present invention relates to the art of forming molded plastic articles from molten plastic material, such as polyethylene terephthalate or polyvinyl chloride or the like, especially the injection molding of multicavity molds using a hot runner manifold system in the mold to distribute the molten resin to each mold cavity.

As is well known in this art, the molten resin is transferred to the mold along a transfer path involving the flow of molten plastic through channels and passages which may be heated either externally or with heaters embedded within the hot runner components. However, the flow of the molten plastic material, even through the heated transfer path, subjects the material to shear heating with the creation of a memory or shear heating history. This causes a particular problem in the processing of heat sensitive resins due to the degradation of the resin with the resultant production of poor quality parts. In addition, this causes a differential flow profile of the molten material in the transfer system, especially when the flow of the resin through the channels is split from one channel into two or more channels or is characterized by a change in flow direction. The result of this is unequal filling of cavities with some cavities being underpacked and others being overpacked, with consequent rejection of plastic parts.

The prior art describes thorough mixing of the resin before it is injected into the hot runner system; however, this is ineffective in controlling the problems associated with shear heating in the transfer path. Typical of this art is U.S. Patents 3,404,869, 3,583,678, 3,817,675, 3,989,434, 3,785,620, and 3,871,624. It is also known to use mixers in injection nozzles to remove hot spots; however, these mixers are not necessarily designed to improve flow of the resin.

Reducing the diameter of the channels is not an effective solution as it increases the amount of pressure required to push the resin through the channels. In addition, shear heating is increased with a resultant aggravation of the thermal degradation problem.

Computer software packages are used to computer design hot runner systems in order to hydraulically balance the channel system. That is, the pressure drops created by the resin flowing through the channels are computed and the channel layout arranged to equalize the pressure drops for each cavity location. However, this does not respond to the problems created by the shear heat history of the resin as it flows through the channel system.

Accordingly, it is a principal object of the present invention to provide an improved method of processing molten plastic material for the formation of molded plastic articles.

It is a further object of the present invention to provide an improved process as aforesaid which mitigates the problems associated with shear heating of molten plastic material along a transfer path.

It is still a further object of the present invention to provide a process as aforesaid which is simple, economical and convenient to use.

It is still a further object of the present invention to provide a system for performing the above method.

Further objects and advantages of the present invention will appear hereinbelow.

## SUMMARY OF THE INVENTION

In accordance with the present invention the foregoing objects and advantages are readily obtained and an improved method and system provided for processing molten plastic material susceptible to shear heating and the creation of a shear heating history for the formation of molded plastic articles.

The method of the present invention comprises: providing a source of molten plastic material; transferring said molten plastic material from said source to a nozzle or nozzles for supplying a mold for the formation of said molded plastic article, generally a multicavity mold, along a transfer path including at least one tubular channel; and mixing said molten plastic material at least once to equalize the shear heating history thereof. The molten material transfer along the transfer path subjects the molten plastic material to shear heating with the creation of a shear heating history. It has been found that by mixing the molten plastic material at least once, the shear heating history thereof can be equalized.

The transfer path is generally in a hot runner manifold, but also may take place in a transfer path from a source of molten plastic to a reservoir therefor, with the molten plastic subsequently transferred from the reservoir to the mold. The transfer path generally includes at least one change of direction with the mixing step taking place after the change of direction. In a preferred embodiment, the transfer path is characterized by a split transfer path with symmetrically opposite changes of direction, wherein the mixing step takes place when the velocity profiles of the molten plastic material differ in symmetrically opposite parts of the transfer path by mixing said material before said split transfer path. The mixing step or steps generally take place when the temperature of the molten plastic material increases by about 10° F or greater.

The present invention further contemplates the provision of plastic material having a substantially zero gradient melt temperature to the transfer path and/or the mold nozzle(s). This is achieved by incorporating at least one mixer within the source of molten plastic material such as the extruder to equalize the heating history.

It has been found in accordance with the present invention that the problems associated with shear heating history, particularly in a transfer path, can be readily overcome. The heat history of the resin can be controlled and the flow balanced to ensure that the resin being delivered to each cavity is in essentially identical condition. This in turn eliminates the problems of unbalanced filling and mitigates the degradation of heat sensitive resins.

Further features of the present invention will appear hereinbelow.

## BRIEF DESCRIPTION OF THE DRAWINGS

The above and other features of this invention will now be described in detail with reference to the accompanying drawings in which:

Fig. 1 is a schematic representation showing processing molten plastic material from a source of molten plastic material to a mold for the formation of a molded plastic article;

Fig. 2 is an enlarged sectional view of a tubular channel for flow of molten plastic material;

Fig. 3 is an enlarged sectional view showing a typical velocity profile through a tubular channel for flow of molten plastic material;

Fig. 4 is an enlarged sectional view showing a typical shear rate or shear stress profile through a tubular channel for flow of molten plastic material;

Fig. 5 is an enlarged sectional view showing various shear rate profiles of heated plastic resin flowing through a channel system inside a hot runner manifold;

Fig. 6 is an enlarged sectional view similar to Fig. 5 showing the effect of mixing the molten plastic material in the melt channel of a hot runner manifold; and

Fig. 7 is a perspective view of a typical mixer for placement in the melt channel of Fig. 6.

Figure 8 and 9 are profiles of acetaldehyde generation per cavity for systems having 32 mold cavities with and without mixing, respectively,

Figure 10 is a cross sectional view of a plasticizer having a mixing device. ·

## DETAILED DESCRIPTION

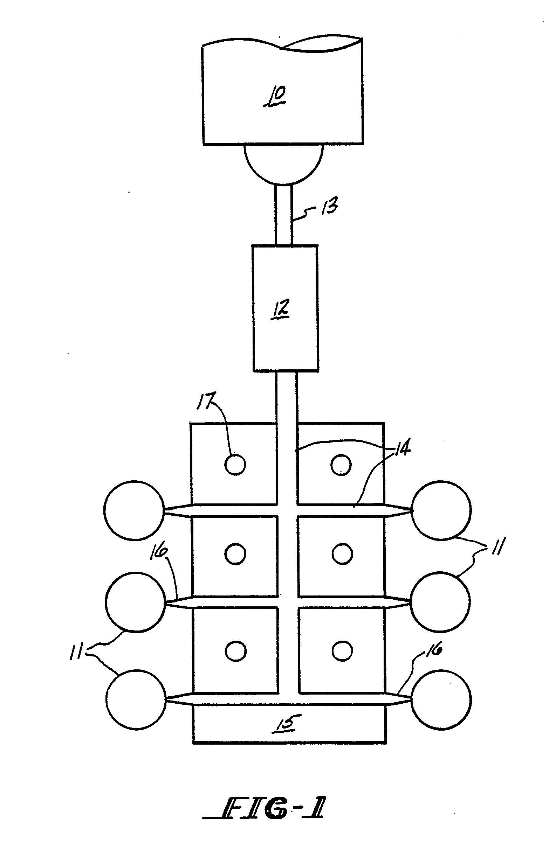

As shown in the schematic representation of Fig. 1, molten plastic material is transferred from a source 10 of molten plastic material, as a plasticizer, to a mold 11 for the formation of a molded plastic articles, and generally a plurality of said molds as shown in Fig. 1. Although six molds are shown in Fig. 1, it should be understood that any convenient number and configuration may be readily employed depending on particular requirements. The plastic material is first plasticized in the plasticizer, transferred to shooting pot or reservoir 12 via channel or transfer path 13 and thence to molds 11 via channels or transfer path 14 in manifold 15 which is generally a hot runner manifold of known design, using injection nozzles 16. Heating means 17 are generally provided to maintain the plastic material in a given temperature range in the manifold, including heating means associated with the nozzles (not shown).

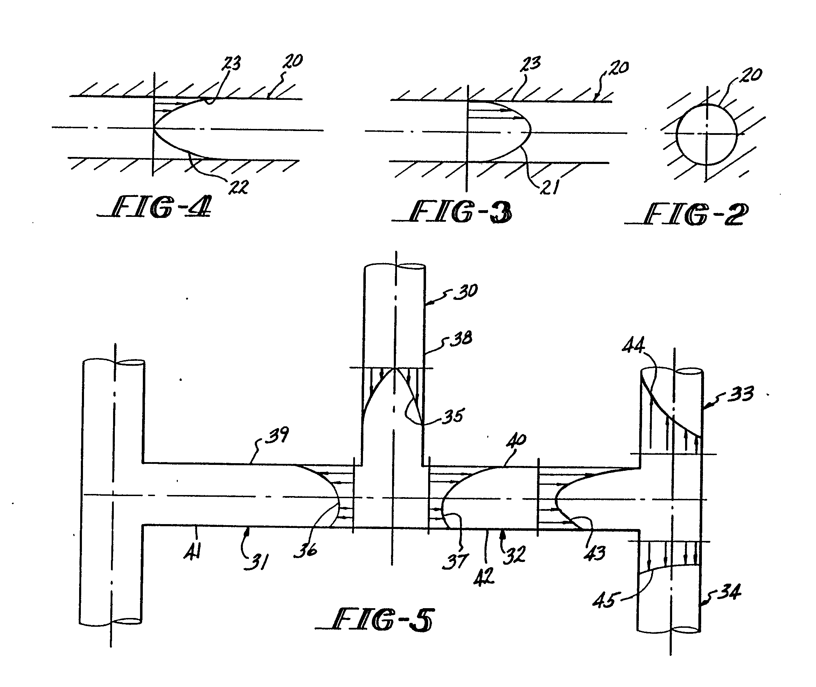

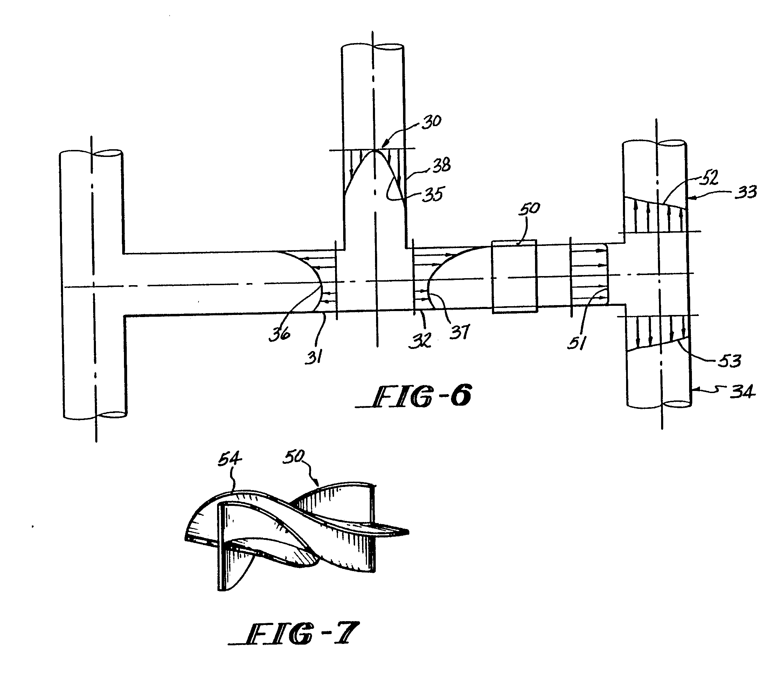

The theory of flow through channels of generally circular cross-section is well known. For example, Fig. 2 shows an enlarged sectional view of a tubular channel 20 for the flow of molten plastic. Fig. 3 shows a typical velocity profile through tubular channel 20, and Fig. 4 shows a typical shear rate or shear stress profile through tubular channel 20, all for the flow of molten plastic material. The arrows show the direction of fluid flow. With reference to Fig. 3, it can be seen that when a fluid flows through tubular channel 20 the maximum velocity of the fluid occurs at the center of the cross-section of the tube and the minimum velocity occurs at the surface where the fluid is in contact with the tube wall 23, see velocity profile 21. If the fluid is molten plastic resin then the velocity profile 21 corresponds to a shear rate or shear stress profile 22 as shown in Fig. 4. the relatively high shear rates near the walls 23 of tube 20 causes the resin to heat up due to the friction heating of the adjacent fluid streams. This is called "shear heating" or "viscous dissipation". Plastic resin has the property of "remembering" all the shear heating it has been subjected to as it passes through the tubular channels. Unequal heating can also be applied to the resin as it passes close by a heating element attached to the mold component containing the channel. It is for this reason that heaters 17 in Fig. 1 should preferably be positioned equally distant from the channels so that the resin is not subject to large variations of heat input.

The "memory" of shear heating is called the "shear history" of the resin and it manifests itself as a variable viscosity profile and sometimes as degradation of the resin due to local overheating. A variable viscosity profile across the tubular section in turn causes the lower viscosity resin to flow more easily and hence preferentially to fill one cavity rather than another. This will be apparent by analyzing the change in shear rate profiles shown in Fig. 5 as the molten plastic material is subdivided in the manifold.

Thus, Fig. 5 shows transfer path or channel 30 subdivided a first time into transfer paths 31 and 32 and subdivided a second time into transfer paths 33 and 34. Shear rate profile 35 changes to shear rate profiles 36 and 37 as the resin is subdivided into transfer paths 31 and 32, respectively. Thus, as the resin is subdivided into transfer paths 31 and 32, the resin at channel walls 38 of first transfer path 30 follows the path of the new channels clinging to walls 39 and 40 of new channels 31 and 32 respectively immediately adjacent walls 38. On the other hand, the resin in the center of channel 30 is split and follows the new channel walls 41 and 42 on the sides opposite walls 39 and 40. The shear rate profiles 36 and 37 in second channels 31 and 32 can be clearly seen as being quite different from shear rate profile 35 of channel 30.

As the resin flows along second channels 31 and 32, the shear rate profile is again modified to shear rate profile 43. For convenience, the profiles are only shown in one direction. Subdividing the flow a second time into third channels 33 and 34 causes a still further change in the shear rate profiles 44 and 45.

Clearly the greater the distance between the subdivisions, the greater is the effect of the flow through the channels. Short distances between the subdivisions break up the flow frequently and tend to minimize the channel flow effect. Clearly, the significant change in shear rate profile represents an unacceptable situation as discussed hereinabove.

As can be clearly seen, in accordance with the present invention, the molten plastic material is mixed at least once in the transfer path in order to equalize the shear heating history of the molten plastic material. This is clearly seen in Fig. 6 wherein resin mixer 50 is placed in channel 32, with an exemplificative embodiment thereof shown in Fig. 7. It has been found in accordance with the present invention that by mixing the molten plastic material at least once, such as in the transfer path, to equalize the shear heating history thereof the foregoing disadvantageous results can be readily overcome. Consequently, the heating history of the resin can be controlled and the flow balanced to ensure the resin being delivered to each cavity is in an essentially identical condition. This in turn eliminates the problems of unbalanced filling and degradation of heat sensitive resins.

As clearly shown in Fig. 6, mixer 50 is placed in second channel 32. The resin entering mixer 50 displays the typical shear heating profile 37 as shown in Fig. 5 resulting from the first subdivision. However, the resin leaving mixer 50 displays an equalized shear heating profile 51 which is slightly modified through the second subdivision into transfer paths 33 and 34 to become shear history profiles 52 and 53. Naturally, a similar mixer 50 should be placed in channel 31 in order to obtain the same effect, and also elsewhere in the transfer path where necessary.

As indicated hereinabove a typical mixer 50 is shown in Fig. 7 which includes a plurality of vanes 54 across the transfer path in order to obtain effective mixing of the resin. The vanes shown in Fig. 7 have a semi-circular configuration to disrupt resin flow and intermix the resin by a swirling interchange of resin material. The embodiment of Fig. 7 is representative only and any suitable mixing device may be used. Naturally, the particular mixers used must be correctly sized in both diameter length and degree of mixing to minimize the associated pressure drop, excessive shear heating and impedance to flow. Preferred results are obtained based on mixer placement in the transfer path. Thus, for example, if the shear heating profile indicates that the temperature of the resin will increase more than approximately $10°F$ depending of course on the resin then a mixer should be installed at that location to redistribute the resin in the channel. For example, shear heating profile 43 in Fig. 5 clearly indicates the need for a mixer. Secondly, if by comparing the velocity profiles of the resin in symmetrically opposite parts of the channel system one finds that said velocity profiles differ, then a mixer should be installed at these locations to restore a balanced flow which is substantially the same in symmetrically opposite locations of the channel system. Thus, for example the different profiles 44 and 45 in Fig. 5 clearly indicates the need for a mixer.

As indicated hereinabove the present invention contemplates mixing the molten plastic material at least once, preferably in the transfer path, to equalize the shear heating history thereof. The transfer path contemplated may be the transfer path from a source of molten plastic material, as extruder 10 in Fig. 1, to a reservoir or shooting pot as shooting pot 12 in Fig. 1. Alternatively, the transfer path can be the transfer path to the molds, as transfer path 14 in Fig. 1.

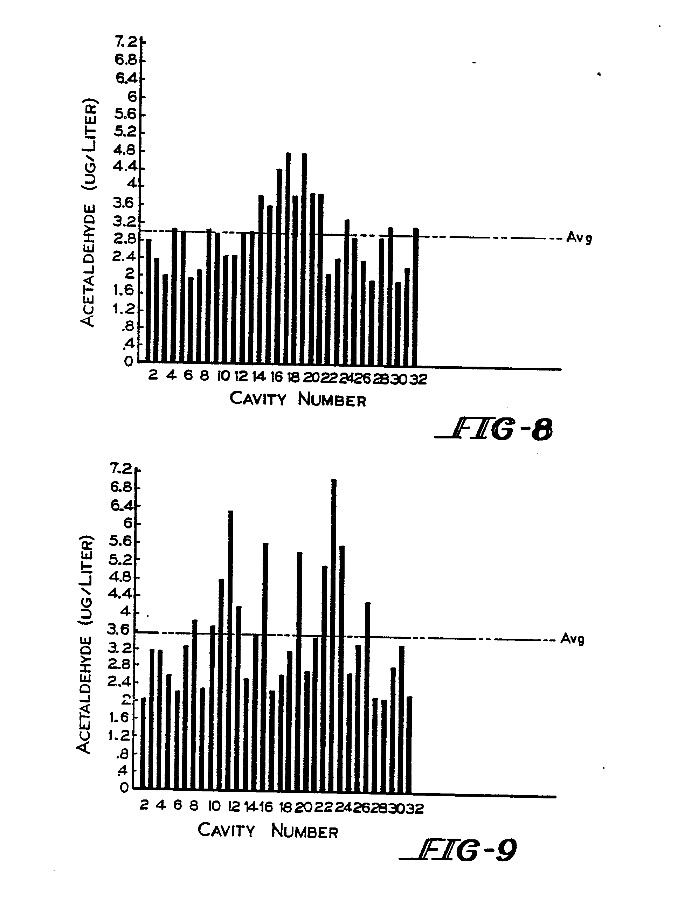

The benefits to be obtained by the present invention are clearly shown by Figures 8 and 9. Both of these figures illustrate the acetaldehyde generation for each cavity of a 32 cavity mold in a system used to process a plastic resin into a desired product. Figure 8 reports the results of using a hot runner manifold with a mixer in the transfer path. Figure 9 reports the results of using a hot runner manifold without a mixer. Comparison of these figures clearly demonstrates that the use of a mixer will promote more uniform results as well as significantly reduce the mean acetaldehyde generated per cavity.

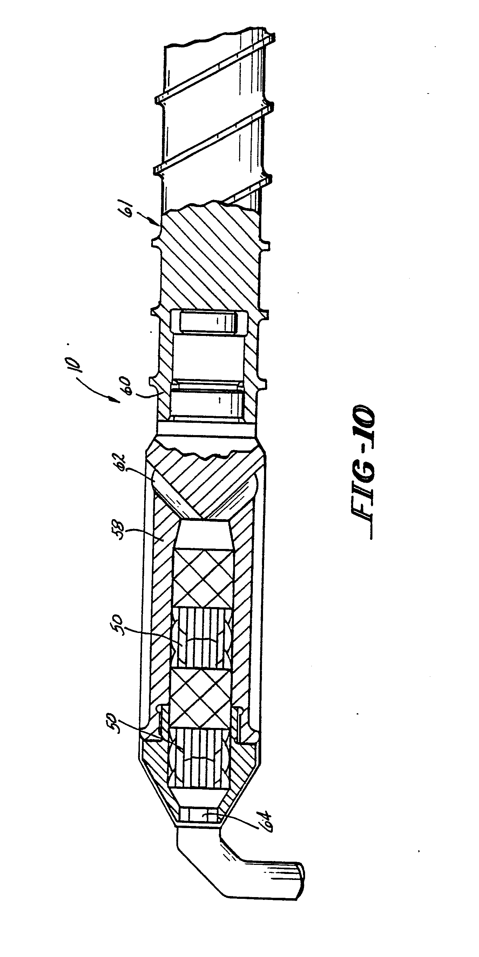

Molten plastic material is often subjected to shear heating while it is in the source. The present invention further contemplates mixing the molten plastic material while it is within the source so as to improve the material flow characteristics by providing a molten plastic material having a substantially zero gradient melt temperature. As shown in Figure 10, the source 10 could be a screw type plasticizer. To achieve the foregoing, one or more mixers 50 are positioned within the source 10. For example, mixing device 58 having internal mixers 50 may be mounted to the head 60 of an extruder screw 61. Any suitable means known in the art such as a threaded connection may be used to join the device 58 to the screw 61. The mixer(s) 50 may be of the type shown n Figure 7. Molten plastic to be supplied to the transfer path 13 and eventually to the nozzles 16 and the molds 11 is first passed through channel(s) 62 into the mixer(s) 50 and subsequently into the path 13 via the channel 64. In this way, material having a substantially equalized heating history can be provided to the transfer path.

It is to be understood that the invention is not limited to the illustrations described and shown herein, which are deemed to be merely illustrative of the best modes of carrying out the invention, and which are susceptible of modification of form, size, arrangement of parts and details of operation. The invention rather is intended to encompass all such modifications which are within it spirit and scope as defined by the claims.

## Claims

Claim 1. Method of processing molten plastic material for the formation of molded plastic articles which comprises: providing a source (10) of molten plastic material; transferring said molten plastic material from said source (10) to a mold (11) for the formation of said molded plastic articles along a transfer path (13,31-34) including at least one tubular channel (20,30), thereby subjecting said molten plastic material to shear heating with the creation of a shear heating history; and mixing said molten plastic material at least once to equalize the shear heating history thereof.

Claim 2. A method according to claim 1 wherein said transfer path (13) includes at least one change in direction, and wherein said mixing step takes place after the change in direction.

Claim 3. A method according to claim 1 or 2 wherein said transfer path (13) takes a place in a hot runner manifold (15).

Claim 4. A method according to one of claims 1-3 wherein said molten plastic material is transferred to a multicavity mold (11).

Claim 5. A method according to at least one of claims 1-4 wherein said mixing step takes place when the temperature of said molten plastic material increases by about at least 10° F.

Claim 6. A method according to at least one of claims 1-5 wherein said transfer path (13) is characterized by a split transfer path with symmetrically opposite changes of direction, and wherein said mixing step takes place when the velocity profiles (21) of the molten plastic material in the transfer path differ in symmetrically opposite parts of the transfer path, wherein said molten plastic material is mixed before said split transfer path.

Claim 7. A method according to at least one of claims 1-6 wherein said molten plastic material is transferred from a source (10) of molten plastic material to a reservoir (12) and thence to a mold (11), wherein said mixing step takes place in the transfer path (13) from said source (10) to said reservoir (12).

Claim 8. A method according to at least one of claims 1-7 wherein said mixing step takes place in said source (10) so as to provide material having a substantially zero gradient melt temperature.

Claim 9. A method according to at least one of claims 1-8 wherein an injection nozzle (16) is provided for supplying said mold (11) with said molten plastic material and said mixing step takes place prior to said material being delivered to said nozzle (16).

Claim 10. A system for processing molten plastic material susceptible to shear heating and the creation of a shear heating history for the formation of molded plastic articles which comprises:

a source (10) of molten plastic material;

a mold (11) for the formation of said molded plastic articles;

a nozzle (16) for supplying the mold (11) with said molten plastic material;

means for transferring said molten plastic material from said source (10) to said nozzle (16); and

means for substantially equalizing the shear heating history of said plastic material at least once prior to it being delivered to said nozzle (16).

Claim 11. A system according to claim 10 further comprising said equalizing means (50) being located within said source (10) to permit the delivery of plastic material having a substantially zero gradient melt temperature.

Claim 12. A system according to claim 11 wherein said source (10) comprises a screw-type extruder (61) and said equalizing means comprises a mixing device (58) having at least one mixer (50) mounted to said extruder.

Claim 13. A system according to claim 10-12 wherein said equalizing means comprises means for substantially equalizing the shear history of said plastic material more than once prior to said plastic material being delivered to said nozzle (16).

Claim 14. A system according to at least one of claims 10-13 further comprising said equalizing means being located within said transfer means (13).

Claim 15. A system according to at least one of claims 10-14 wherein said transfer means (13) includes a plurality of tubular channels (10,30,38-42) and said equalizing means comprises at least one mixer (50) positioned within at least one of said channels.

Claim 16. A system according to at least one of claims 10-15 further comprising a reservoir (12) and said equalizing means being positioned intermediate said source (10) and said reservoir (12).

Claim 17. A system according to at least one of claims 10-16 wherein said transfer means comprises a path (13) having at least one change in direction and wherein said equalizing means is located after said at least one change in direction.

Claim 18. A system according to at least one of claims 10-17 wherein said mold (11) is multicavity mold having a plurality of nozzles 816) associated therewith.

_FIG-1_

FIG-2

FIG-3

FIG-4

FIG-5

FIG-6

FIG-7

EP 0 293 756 A2

FIG-8

FIG-9

FIG-10